# EUROPÄISCHE PATENTSCHRIFT

(11) **EP 1 169 403 B1**
(45) Veröffentlichungstag und Bekanntmachung des Hinweises auf die Patenterteilung: **15.09.2004**
(21) Anmeldenummer: 00920743.2
(22) Anmeldetag: 27.04.2000
(51) Int. Cl.: C09J 133/08, C08F 220/12, C09J 7/02

(54) **HAFTKLEBSTOFFE**
CONTACT BONDING ADHESIVES
ADHESIFS DE CONTACT

(30) Priorität: 06.05.1999 DE 19920807
(43) Veröffentlichungstag der Anmeldung: 09.01.2002
(73) Patentinhaber: BASF AKTIENGESELLSCHAFT, 67056 Ludwigshafen (DE)
(72) Erfinder: GERST, Matthias, D-67433 Neustadt (DE); AUCHTER, Gerhard, D-67098 Bad Dürkheim (DE); SCHULER, Bernhard, D-68199 Mannheim (DE)
(86) Internationale Anmeldenummer: PCT/EP2000/003811
(87) Internationale Veröffentlichungsnummer: WO 2000/068335

(56) Entgegenhaltungen:
- EP-A- 0 622 434
- DE-A- 19 632 202

## Beschreibung

Haftklebstoffe, enthaltend eine wäßrige Polymerdispersion, dadurch gekennzeichnet, daß das Polymer aufgebaut ist aus

| | |
|---|---|
| 50 bis 99,9 Gew.-% | mindestens eines C₁-C₁₂ Alkyl(meth)acrylats (Monomere a) |
| 0,05 bis 20 Gew.-% | mindestens einer vinylaromatischen Verbindung (Monomere b) |
| 0,05 bis 10 Gew.-% | mindestens einer ethylenisch ungesättigten Hydroxyverbindung (Monomere c) |
| 0 bis 10 Gew.-% | einer ethylenisch ungesättigten Säure oder eines Säureanhydrids (Monomere d) und |
| 0 bis 30 Gew.-% | andere ethylenisch ungesättigten Verbindungen (Monomere e) |

wobei die Gewichtsangaben auf das Polymer bezogen sind und die Polymerdispersion ein Emulgatorgemisch aus

| | |
|---|---|
| 20 bis 95 Gew.-% | eines aromatischen Emulgator und |
| 5 bis 80 Gew.-% | eines Sulfats der Formel |

R⁸-O-(Z-O)ₙ - SO⁻₃ k⁺ II,

wobei die Variablen folgende Bedeutung haben:
- R⁸:: C₁-C₁₈-alkyl
- Z:: 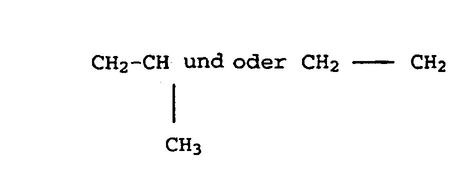
- n:: eine ganze Zahl von 1 von 40
- k:: ein Kation,
und wobei es sich bei dem aromatischen Emulgator um einen Emulgator handelt, der zu mindestens 5 Gew.-% aus aromatischen C-Atomen besteht, enthält, wobei die Gewichtsangaben der Emulgatoren auf die gesamte Emulgatormenge bezogen sind.

Haftklebstoffe bilden einen bleibenden klebrigen Film, der schon unter geringem Druck bei Raumtemperatur an den verschiedensten Oberflächen haftet (eng.: pressure sensitive adhesives (PSA). Haftklebstoffe dienen zum Herstellen selbstklebender Erzeugnisse wie Selbstklebeetiketten, -bänder oder -folien. Derartige Produkte lassen sich sehr einfach anwenden und ermöglichen ein schnelles Arbeiten beim Verkleben. Es sind im Gegensatz zu Kontaktklebemassen keine Ablüftzeiten erforderlich. Auch eine sog. "offene Zeit", innerhalb der die Verklebung ausgeführt werden muß, existiert nicht. Die Qualität eines selbstklebenden Artikels hängt im wesentlichen davon ab, ob die innere Festigkeit (Kohäsion) und die Haftung des Klebstoffilms auf der zu beklebenden Oberfläche (Adhäsion) entsprechend der Anwendung aufeinander abgestimmt sind.

Insbesondere bei Haftklebstoffen für Folien, Klebebänder oder Etiketten muß die Kohäsion so groß sein, daß beim Stanzen und Schneiden kein Fadenziehen bzw. Kantenaustritt auftritt, da es sonst zu Verschmutzungen der Schneidewerkzeuge und Verklebung der Schnittflächen kommt. Gleichzeitig soll die Adhäsion auf einem hohen Niveau liegen, um eine gute Haftung auf dem zu beklebenden Substrat zu erreichen.

Adhäsion und Kohäsion sind im allgemeinen nicht unabhängig voneinander optimierbar. Gewünscht sind Maßnahmen, die entweder das Niveau beider Eigenschaften anheben oder zumindest eine Eigenschaft unverändert erhalten, während sich die jeweils andere verbessert.

Haftklebstoffe bzw. Klebstoffe auf Basis von Polyacrylatdispersionen, sind z.B. aus WO 98/06763, WO 98/23656, oder EP-A-625 557 bekannt. Derartige Copolymerisate zeigen noch nicht das gewünschte Adhäsions-, Kohäsionsniveau, bzw. Adhäsions-, Kohäsionsverhältnis. Aus DE 19818394 (0Z48974) sind Haftklebstoffe mit aromatischen Emulgator bekannt.

In DE-A-19632202 und EP-A-622434 wird die Herstellung von Polymerdispersionen für Haftklebstoffe oder Kaschierklebstoffe durch Emulsionspolymerisation beschrieben. Die oben definierten Emulgatorgemische werden nicht genannt.

Aufgabe der vorliegende Erfindung waren Haftklebestoffe mit verbesserter Adhäsion und/oder Kohäsion. Demgemäß wurden die oben definierten Haftklebestoffe gefunden.

Das Polymer der wäßrigen Polymerdispersion ist aus den eingangs definierten Monomeren a) bis e) aufgebaut.

Bei den Monomeren a) handelt es sich um C₁-C₁₂-Alkyl(meth)acrylat, insbesondere auch um Gemische der Alkyl(meth)acrylate.

In Betracht kommen bevorzugt C₁-C₈-Alkyl(meth)acrylate.

Genannt seien z.B. Methylacrylat, Methylmethacrylat, n-Butylacrylat, n-Butylmethacrylat, 2-Ethylhexylacrylat, Ethylacrylat.

Bei Monomeren b) handelt es sich vorzugsweise um α-Methylstyrol oder Styrol.

Besonders bevorzugt ist Styrol. Der Gehalt an Monomeren b) im Polymer liegt vorzugsweise bei maximal 10, insbesondere maximal 5, besonders bevorzugt maximal 3 Gew.-%, der Gehalt liegt vorzugsweise über 0,1 Gew.-%, insbesondere über 0,5.

Bei Monomeren c) handelt es sich vorzugsweise um C₁-C₁₈-Hydroxyalkyl(meth)acrylate.

Besonders bevorzugt sind C₂ bis C₈ Hydroxyalkyl(meth)acrylate.

Genannt seien z.B. Hydroxypropylacrylat oder -methacrylat oder Hydroxy n-Butylacrylat bzw. -methacrylat.

Besonders bevorzugt ist Hydroxypropylacrylat oder Hydroxypropylmethacrylat.

Der Gehalt der Monomeren c) im Polymer liegt vorzugsweise bei bis zu 10, insbesondere 5, besonders bevorzugt 3 Gew.-%, der Gehalt beträgt vorzugsweise mindestens 0,1 Gew.-%, insbesondere mindesetens 0,5 Gew.-%.

Monomere d) sind z.B. ethylenisch ungesättigte Monomere mit insbesondere Carbonsäuregruppen wie (Meth)acrylsäure, Maleinsäure, ethylenisch ungesättigte Säureanhydride oder Halbester, wie Maleinsäureanhydrid oder Maleinsäure- bzw. Fumarsäurehalbester. Bevorzugt sind Acrylsäure oder Methacrylsäure. Der Gehalt an Monomeren d) liegt vorzugsweise bei maximal 5 Gew.-%, bezogen auf das Polymer.

Weitere Monomere e) können beliebiger Art sein. Bevorzugt genannt seien z.B. Vinylester Olefine, Diolefine, ethylenisch ungesättigte Amide oder Nitrile, etc.

Das Polymerisat besteht vorzugsweise aus

| | | |
|---|---|---|
| 60 bis 99,5 | Gew.-% | Monomere a) |
| 0,05 bis 5 | Gew.-% | Monomere b) |
| 0,05 bis 5 | Gew.-% | Monomere c) |
| 0 bis 5 | Gew.-% | Monomere d) |
| 0 bis 25 | Gew.-% | Monomere e) |

und besonders bevorzugt aus

| | | |
|---|---|---|
| 75 bis 99,8 | Gew.-% | Monomere a) |
| 0,1 bis 3 | Gew.-% | Monomere b) |
| 0,1 bis 3 | Gew.-% | Monomere c) |
| 0 bis 5 | Gew.-% | Monomere d) |
| 0 bis 15 | Gew.-% | Monomere e) |

Die Glasübergangstemperatur des Polymerisats läßt sich nach üblichen Methoden wie Differentialthermoanalyse oder Differential Scanning Calorimetrie (s. z.B. ASTM 3418/82, sog. "midpoint temperature") bestimmen.

Die Glasübergangstemperatur (Tg) des Polymeren liegt bevorzugt zwischen - 60°C und + 10°C, besonders bevorzugt zwischen - 50°C und - 10°C und ganz besonders bevorzugt zwischen - 50°C und -20 °C.

Die Herstellung des Polymeren erfolgt vorzugsweise durch Emulsionspolymerisation, es handelt sich daher um ein Emulsionspolymerisat.

Bei der Emulsionspolymerisation werden üblicherweise ionische und/oder nichtionische Emulgatoren und/oder Schutzkolloide bzw. Stabilisatoren als grenzflächenaktive Verbindungen verwendet.

Vorzugsweise besteht der aromatische Emulgator zu mindestens 10 Gew.-%, besonders bevorzugt zu mindestens 20 Gew.-% aus aromatischen C-Atomen (d.h. C-Atome, die Bestandteil eines aromatischen Ringsystems sind.)

Der Anteil der aromatischen C-Atome liegt im allgemeinen unter 80 Gew.-%.

Vorzugsweise handelt es sich beim aromatischen Emulgator um einen ionischen Emulgator, insbesondere um einen Emulgator mit ein oder zwei, vorzugsweise zwei Sulfatgruppen.

Das Molgewicht des Emulgators liegt vorzugsweise unter 2000, insbesondere unter 1000 g/mol.

Besonders bevorzugt handelt es sich bei dem aromatischen Emulgator um eine ionische Verbindung mit einem Molekulargewicht unter 2000 g/mol, welche mindestens eine Sulfatgruppe oder Sulfonatgruppen, vorzugsweise zwei Sulfatgruppen oder Sulfonatgruppen mit zwei gegebenenfalls substituierte Phenylgruppen enthält.

Bevorzugt sind aromatische Emulgatoren mit ein oder zwei, vorzugsweise zwei Sulfonatgruppen.

Besonders bevorzugt handelt es sich um eine Verbindung der Formel 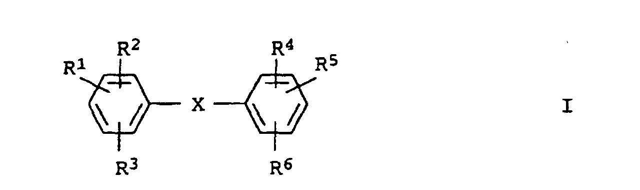 wobei X für O, S, CH₂, NH oder NR⁷, ein oder zwei der Reste R¹ bis R⁶ für eine Gruppe SO₃^{⊖} K^{⊕} und die übrigen Reste R¹ bis R⁶ für H oder eine C₁ - C₁₈ Alkylgruppe, R⁷ für eine C₁-C₁₈ Alkylgruppe K für ein Gegenkation stehen.

Vorzugsweise steht X für O. Vorzugsweise stehen ein oder zwei der Reste R¹ bis R⁶ für eine C₁-C₁₈ Alkylgruppe, insbesondere für eine C₆-C₁₈ Alkylgruppe und die übrigen Reste R¹ - R⁶ für H-Atome und die Sulfonatgruppen.

Bei K handelt es sich vorzugsweise um ein Gegenkation; ausgewählt aus z.B. den Alkalimetallen, Ammonium oder auch Wasserstoff. Besonders bevorzugt ist Natrium. Bei Verbindungen der Formel I handelt es sich üblicherweise auch um ein Gemisch von Verbindungen mit unterschiedlichen Substitutionsgrad (mono- oder dialkyliert) und unterschiedlichen Substitutionsposition der Substituienten (der Sulfonatgruppen und der ein oder zwei Alkylgruppen). Verbindungen mit der Formel I werden unter dem Warenzeichen Dowfax® 2A von Dow Chemical Company vertrieben.

Bei dem nichtaromatischen Emulgator handelt es sich um einen solchen der Formel

R⁸-O-(Z-O)ₙ - SO⁻₃ k⁺ II

wobei die Variablen folgende Bedeutung haben:
- R⁸:: C₁-C₁₈ Alkyl, vorzugsweise C₁₀-C₁₆
- Z:: 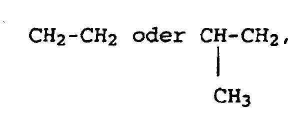 bevorzugt CH₂-CH₂
- n:: eine ganze Zahl von 1 bis 40, vorzugsweise von 2 bis 30
- K⁺:: ein Kation, z.B. H⁺ ein Alkalikation von z.B. Na,.K oder Ammonium

Unter Verbindungen der Formel II sollen auch Verbindungen mit sowohl 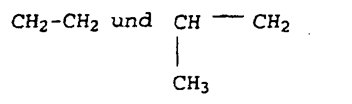 verstanden werden.

Verbindungen der Formel II werden z.B. unter der Bezeichnung Disponil® FES 77 von Henkel vertrieben.

Das Emulgatorgemisch besteht aus

| | |
|---|---|
| 20 bis 95 Gew.-% | eines aromatischen Emulgators, insbesondere dem der Formel I und |
| 5 bis 80 Gew.-% | eines nicht-aromatischen Emulgators der Formel II |

Vorzugsweise beträgt der Anteil des aromatischen Emulgators 30 bis 95 Gew.-% und die des nicht aromatischen Emulgators 5 bis 70 Gew.-%, wobei die Gewichtsangaben auf die Gesamtmenge der Emulgatoren bezogen sind.

Der Emulgator bzw. das Emulgatorgemisch wird üblicherweise in Mengen von 0,1 bis 15 Gew.-%, vorzugsweise von 0,3 bis 5, besonders bevorzugt von 0,5 bis 3 Gew.-%, bezogen auf die zu polymerisierenden Monomeren verwendet. Die erhaltene Polymerdispersion enthält demgemäß die genannten Emulgatormengen.

Wasserlösliche Initiatoren für die Emulsionspolymerisation sind z.B. Ammonium- und Alkalimetallselze der Peroxidischwefelsäure, z.B. Natriumperoxodisulfat, Wasserstoffperoxid oder organische Peroxide, z.B. tert-Butylhydroperoxid.

Geeignet sind insbesondere sogenannte Reduktions-, Oxidations(Red-Ox)-Initiator Systeme.

Die Red-Ox-Initiator-Systeme bestehen aus mindestens einem meist anorganischem Reduktionsmittel und einem anorganischen oder organischen Oxidationsmittel.

Bei der Oxidationskomponente handelt es sich z.B. um die bereits vorstehend genannten Initiatoren für die Emulsionspolymerisation.

Bei der Reduktionskomponenten handelt es sich z.B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z.B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Verbindungen werden meist in Form wäßrigen Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Weiterhin können bei der Polymerisation auch Regler eingesetzt werden, durch die die Molmasse verringert wird. Geeignet sind z.B. Verbindungen mit einer Thiolgruppe wie tert.-Butylmercaptan, Thioglykolsäureethylacrylester, Mercaptoethanol, Mercaptopropyltrimethoxysilan oder tert.-Dodecylmercaptan. Der Anteil dieser Regler kann insbesondere 0 bis 0,3 Gew.-%, bevorzugt 0,02 bis 0,3 Gew.-% bezogen auf das Polymerisat, betragen.

Die Emulsionspolymerisation erfolgt in der Regel bei 30 bis 100, vorzugsweise 50 bis 95°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt.

Die Art und Weise, in der der Initiator im Verlauf der radikalischen wäßrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise eingesetzt werden. Im einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach Ende der eigentlichen Emulsionspolymerisation, d.h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wäßrige Dispersionen des Polymeren in der Regel mit Feststoffgehalten von 15 bis 75 Gew.-%, bevorzugt von 40 bis 75 Gew.-% erhalten.

Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach den für eine niedrige Viskosität angestrebten Teilchengrößenverteilung.

Die erhaltenen Polymere, bzw. Polymerdispersionen werden als Haftklebstoffe verwendet. Insbesondere eigenen sie sich als Haftklebstoffe für Etiketten oder Klebebänder.

Die Polymeren werden vorzugsweise in Form ihrer wäßrigen Dispersion verwendet. Die wäßrigen Polymerdispersionen können ohne weitere Zusatzstoffe als Haftklebstoffe Verwendung finden.

Bei der Verwendung als Haftklebstoff kann den Polymerisaten bzw. den wäßrigen Dispersionen der Polymerisate ein Tackifier, d.h. ein klebrigmachendes Harz zugesetzt. Tackifier sind z.B. aus Adhäsive Age, Juli 1987, Seite 19-23 oder Polym. Mater. Sci. Eng. 61 (1989), Seite 588-592 bekannt.

Tackifier sind z.B. Naturharze, wie Kolophoniumharze und deren durch Disproportionierung oder Isomerisierung, Polymerisation, Dimerisation, Hydrierung entstehenden Derivate. Diese können in ihrer Salzform (mit z.B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol, Pentaerythrit.

Des weiteren finden auch Kohlenwasserstoffharze, z.B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, α-Methylstyrol, Vinyltoluol Verwendung.

Als Tackifier werden zunehmend auch Polyacrylate, welche ein geringes Molgewicht aufweisen, verwendet. Vorzugsweise haben diese Polyacrylate ein gewichtsmittleres Molekulargewicht M_{w} unter 30 000. Die Polyacrylate bestehen bevorzugt zu mindestens 60, insbesondere mindestens 80 Gew.-% aus C₁-C₈ Alkyl(meth)acrylaten.

Bevorzugte Tackifier sind natürliche oder chemisch modifizierte Kolophoniumharze. Kolophoniumharze bestehen zum überwiegenden Teil aus Abietinsäure oder Abietinsäurederivaten.

Die Tackifier können in einfacher Weise den erfindungsgemäßen Polymerisaten, bevorzugt den wäßrigen Dispersionen der Polymerisate zugesetzt werden. Vorzugsweise liegen die Tackifier dabei selber in Form einer wäßrigen Dispersion vor.

Die Gewichtsmenge der Tackifier beträgt vorzugsweise 5 bis 100 Gew.-Teile. besonders bevorzugt 10 bis 50 Gew.-Teile. bezogen auf 100 Gew.-Teile Polymerisat. (fest/fest).

Neben Tackifiern können z.B. noch weitere Additive z.B. Verdikkungsmittel, Entschäumer, Weichmacher, Pigmente, Netzmittel oder Füllstoffe bei der Verwendung als Haftklebstoff Verwendung finden. Die erfindungsgemäßen Haftklebstoffe enthalten daher neben der wäßrigen Polymerdispersion gegebenenfalls noch Tackifier und/oder die vorstehenden Additive.

Die Haftklebstoff können durch übliche Methoden, z.B. durch Rollen, Rakeln, Streichen etc. auf Substrate, z.B. Papier oder Polymer-Folien, bevorzugt bestehend aus Polyethylen, Polypropylen, das biaxial oder monoaxial verstreckt sein kann, Polyethylenterephthalat, Polyvinylchlorid, Polystyrol, Polyamid oder Metall aufgebracht werden. Das Wasser kann bevorzugt durch Trocknung bei 50 bis 150°C entfernt werden. Zur späteren Verwendung kann die mit Haftklebstoff beschichtete Seite der Substrate, z.B. der Etiketten, mit einem Releasepapier, z.B. mit einem silikonisierten Papier, abgedeckt werden.

Die erfindungsgemäßen Haftklebstoffe zeigen eine verbesserte Adhäsion und Kohäsion, bzw. ein verbessertes Adhäsions-/Kohäsionsverhältnis.

### Beispiele

### A) Prüfmethoden

a) Herstellung der Prüfstreifen
   Die zu prüfende Dispersion wird mit einer Rakel in dünner Schicht auf ein silikonisiertes Papier aufgetragen und 3 min bei 90°C getrocknet. Die Spalthöhe der Rakel wird dabei so gewählt, daß sich für den getrockneten Klebstoffe eine Auftragsmenge von 19-21 g/m² ergibt. Auf den getrockneten Klebstoff wird eine handelsübliche OPP·Folie (30µ, Corona vorbehandelt) aufgelegt und mit einem Handroller fest angerollt. Das so hergestellte Folienlaminat wird in Streifen von 0,5 inch und von 2,5 cm Breite geschnitten. Diese Streifen werden vor der Prüfung mindestens 24h im Normklima gelagert.
b) Prüfung der Scherfestigkeit als Maß für die Kohäsion (in Anlehnung an FINAT FTM 7)
   Nach Abziehen des silikonisierten Papiers wird der Folien-Prüfstreifen so auf den Rand eines Prüfblechs aus Edelstahl verklebt, daß sich eine Verklebungsfläche von 2,5 x 2,5 cm ergibt. 10 Minuten nach dem Verkleben wird am überstehenden Ende des Folienstreifens ein 1000 g-Gewichts befestigt und das Prüfblech senkrecht aufgehängt. Umgebungsbedingungen: 23°C, 50 % relative Luftfeuchtigkeit. Als Scherfestigkeit wird die Zeit bis zum Versagen der Verklebung unter Einfluß des Gewichts als Mittelwert aus den Ergebnissen von drei Prüfkörpern in Minuten angegeben.
c) Prüfung der Schälfestigkeit als Maß für die Adhäsion (in Anlehnung an FINAT FTM 1)
   Nach Abziehen des silikonisierten Papiers wird ein 2,5 cm breiter Folien-Prüfstreifen auf ein Prüfblech aus Edelstahl verklebt. Umgebungsbedingungen: 23°C, 50 % relative Luftfeuchtigkeit. 1 Minute nach der Verklebung (Substrat Afero) bzw. 24 Stunden nach der Verklebung (Substrat Polyethylen) wird der Streifen mit Hilfe einer Zugprüfmaschine in einem Winkel von 180°C mit einer Geschwindigkeit von 300 mm/ min abgezogen. Als Schälfestigkeit wird die dafür im Mittel erforderliche Kraft in N/2cm als Mittelwert aus den Ergebnissen von drei Prüfkörpern angegeben.

### B) Herstellung der Dispersionen:

### Vergleichsbeispiel V1:

In einem Polymerisationsreaktor wird eine Lösung von 0,76 g Ascorbinsäure in 200 g Wasser auf 90°C unter Rühren erwärmt und dann unter weiterem Rühren eine wäßrige Lösung von 20,27 g Natriumperoxidsulfat (Konzentration 7 Gew.-%) zugegeben. Nach 5 min. wird Zulauf 1 gestartet und in den ersten 6 min mit einer Zulaufgeschwindigkeit von 1,3 g/min dosiert. Dann wird für die nächsten 13 min die Zulaufgeschwindigkeit von Zulauf 1 auf 1,4 g/min, für weitere 13 min auf 2,9 g/min und dann für weitere 13 min auf 4,3 g/min erhöht. Die Zulaufgeschwindigkeit wird dan auf 7,73 g/min gesteigert und über weitere 225 min konstant gehalten. Zeitgleich mit Zulauf 1 wird der Zugabe der Lösung von 5,16 g Natriumperoxidsulfat in 68 g Wasser gestartet und mit konstanter Zulaufgeschwindigkeit in 270 min dosiert. Nach dem Ender des Zulaufs 1 werden bei 90°C unter Rühren zeitgleich 15 g einer 10%igen Lösung von tert.-Butylhydroperoxid in Wasser sowie in Lösung von 1,5 g Natriumdisulfit in einer Mischung aus 34,3 g Wasser und 0,9 g Aceton zudosiert. Letztlich werden bei 90°C in 15 min 15 g einer wässrigen Lösung (50 %ige) eines Sulfobernsteinsäuredioktylesters zugegeben.
Der Feststoffgehalt der Dispersionen ist auf 68 bis 70 % eingestellt.

Zulauf 1:
287 g Wasser
50 g einer 30 %igen wäßrigen Lösung des Natriumsalzes des Schwefelsäurehalbesters von mit 30 Ethylenoxideinheiten ethoxiliertem Dodecanol (Disponil FES77)
6,7 g einer 45 %igen wäßrigen Lösung des Natriumsalzes des mit einem C₁₂-C₁₄-Alkylrest und mit zwei Sulfonylresten derivatisierten Diphenylethers (Dowfax 2A1)
30 g einer 10 %igen wäßrigen Lösung von Natronlauge
7,5 g Acrylsäure AS (0,5 %)
165 g Methylmethacrylat MMA (11 %)
1327,5 g 2-Ethylhexylacrylat EHA (88,5 %)

Bei den anderen angegebenen Beispielen wurde wie beim Vergleichsbeispiel 1 verfahren, mit dem Unterschied, daß in Zulauf 1 die in der nachfolgenden Tabelle angegebenen Monomermengen verwendet wurden.

Folgende Abkürzungen wurden verwendet:
V: Vergleichsbeispiele
E: erfindungsgemäße Beispiele
EHA: 2-Ethylhexylacrylat
BA: n-Butylacrylat
VAc: Vinylacetat
MMA: Methylmethacrylat
AS: Acrylsäure
S: Styrol
HPA: Hydroxypropylacrylat
S (Afera): Schälfestigkeit auf Afera, sofort
S (PE): Schälfestigkeit auf Polyethylen nach 24 h
K: Kohäsion in [min] auf Afera
pphm. Prozent bezogen auf Monomere

Emulgator a: 1.0 pphm Disponil FES77, 0.2 pphm Dowfax 2A1
Emulgator b: 1.2 pphm Disponil FES77
Emulgator c: 1.2 pphm Steinapol NLS (45 %ige wäßrige Lösung des Natriumsalzes von Laurylsulfat
Emulgator d: 1.2 pphm Texapon NSO-IS (28 %ige wäßrige Lösung des Natriumsalzes des Schwefelsäurehalbesters von mit 2-3 Ethylenoxideinheiten ethoxiliertem Dodecanol)

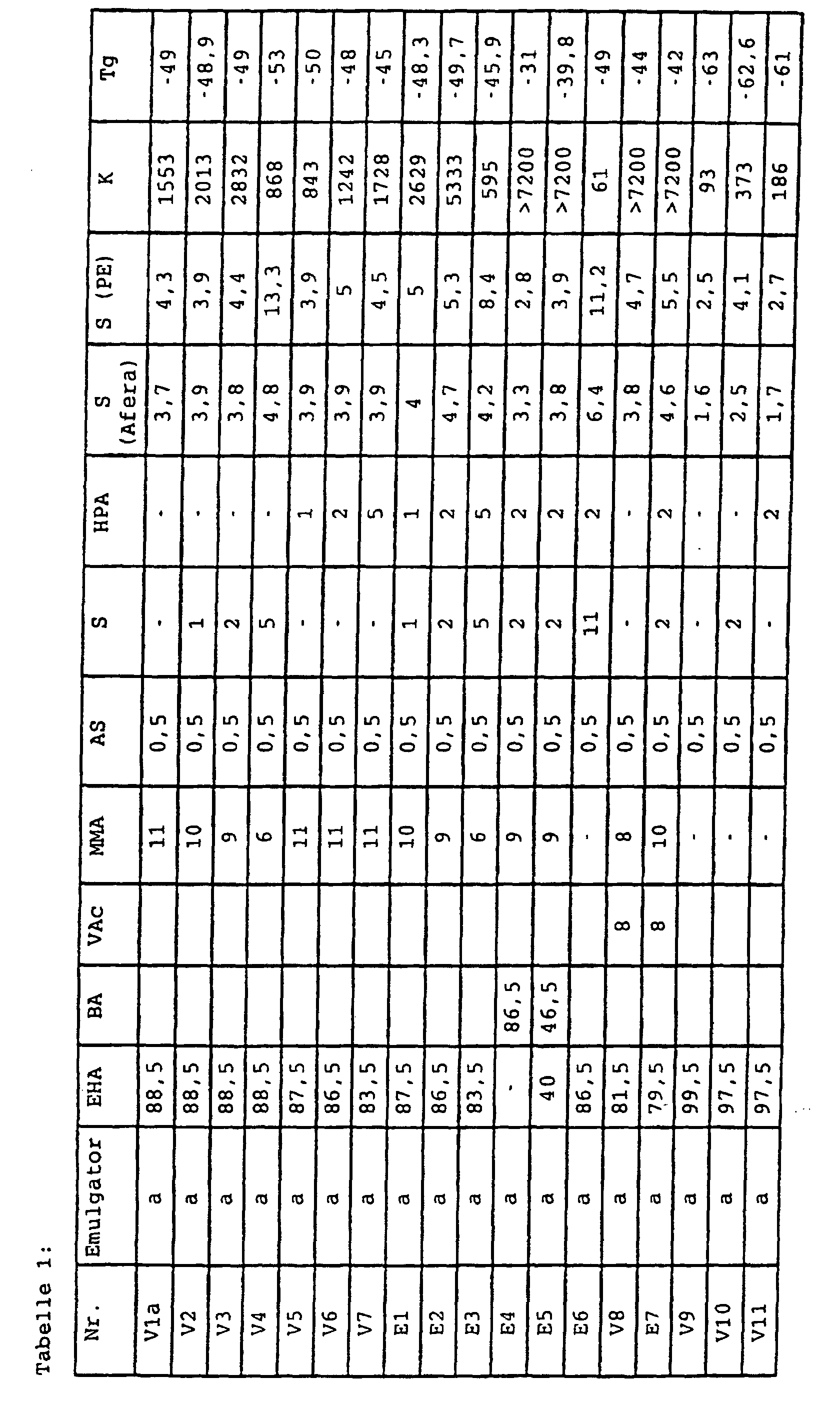

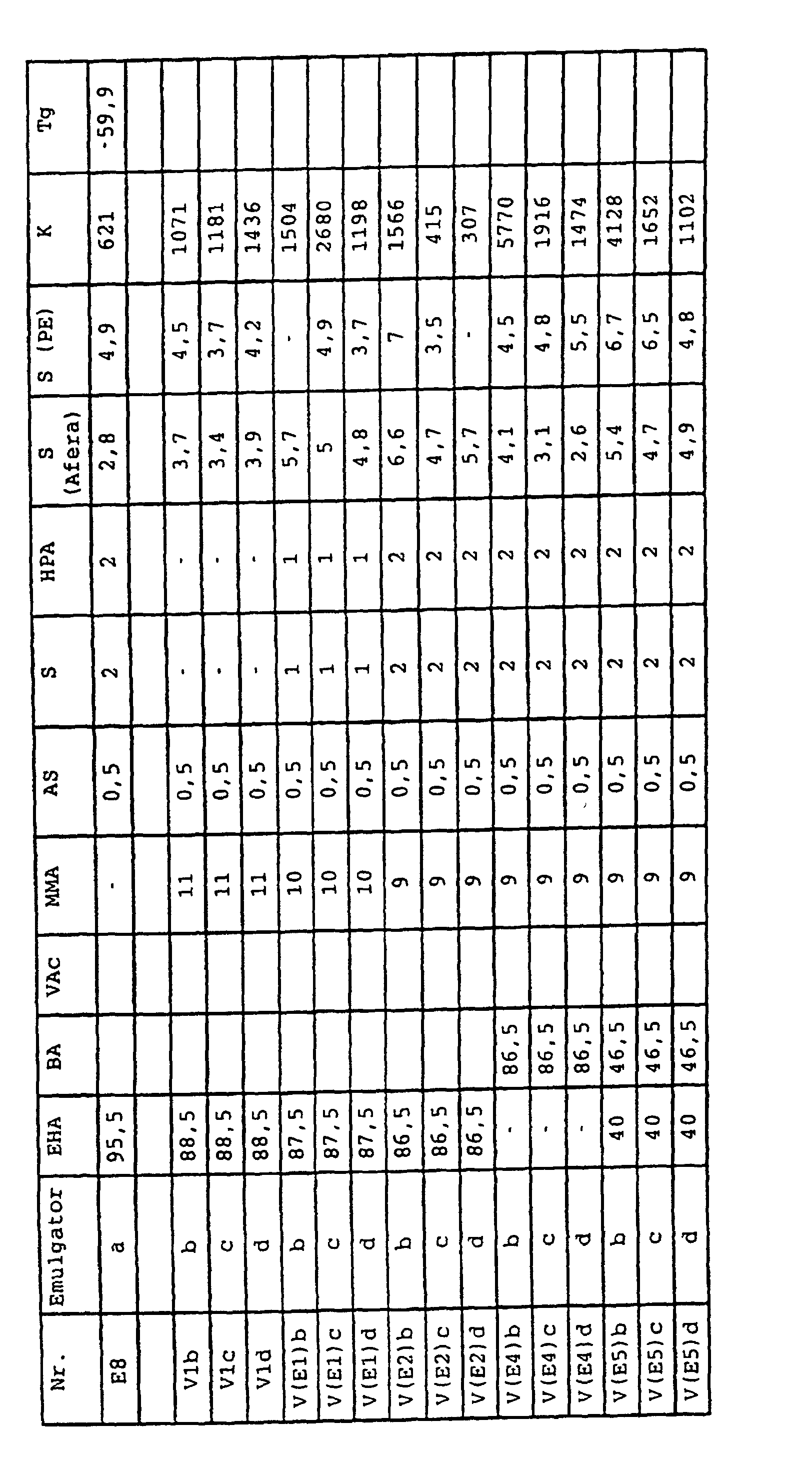

## Patentansprüche

1. Haftklebstoffe, enthaltend eine wäßrige Polymerdispersion, **dadurch gekennzeichnet, daß** das Polymer aufgebaut ist aus
| | |
|---|---|
| 50 bis 99,9 Gew.-% | mindestens eines C₁-C₁₂ Alkyl(meth)acrylats (Monomere a) |
| 0,05 bis 20 Gew.-% | mindestens einer vinylaromatischen Verbindung (Monomere b) |
| 0,05 bis 10 Gew.-% | mindestens einer ethylenisch ungesättigten Hydroxyverbindung (Monomere c) |
| 0 bis 10 Gew.-% | einer ethylenisch ungesättigten Säure oder eines Säureanhydrids (Monomere d) und |
| 0 bis 30 Gew.-% | andere ethylenisch ungesättigten Verbindungen (Monomere e) |
wobei die Gewichtsangaben auf das Polymer bezogen sind und die Polymerdispersion ein Emulgatorgemisch aus
| | |
|---|---|
| 20 bis 95 Gew.-% | eines aromatischen Emulgators und |
| 5 bis 80 Gew.-% | eines Sulfats der Formel |
R⁸-O-(Z O)ₙ - SO⁻₃ k⁺ II,
wobei die Variablen folgende Bedeutung haben:
R⁸: C₁-C₁₈-alkyl
Z: 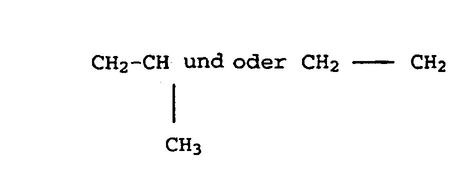
M: eine ganze Zahl von 1 von 40
k: ein Kation,
und wobei es sich bei dem aromatischen Emulgator um einen Emulgator handelt, der zu mindestens 5 Gew.-% aus aromatischen C-Atomen besteht, enthält, wobei die Gewichtsangaben der Emulgatoren auf die gesamte Emulgatormenge bezogen sind.

2. Haftklebstoffe gemäß Anspruch 1, **dadurch gekennzeichnet, daß** das Polymer aufgebaut ist aus
| | |
|---|---|
| 60 bis 99,9 Gew.-% | Monomere a) |
| 0,05 bis 5 Gew.-% | Monomere b) |
| 0,05 bis 5 Gew.-& | Monomere c) |
| 0 bis 5 Gew.-% | Monomere d) und |
| 0 bis 25 Gew.-% | Monomere e). |

3. Haftklebstoffe, gemäß Anspruch 1 oder 2, **dadurch gekennzeichnet, daß** es sich bei Monomer c) um C₁-C₈-Hydroxyalkyl(meth)acrylate handelt.

4. Haftklebstoffe gemäß einen der Ansprüche 1 bis 3, **dadurch gekennzeichnet, daß** es sich bei Monomeren b) um Styrol handelt.

5. Haftklebstoffe gemäß einen der Ansprüche 1 bis 4, **dadurch gekennzeichnet, daß** es sich bei Monomeren a) um C₁ bis C₈ Alkyl(meth)acrylate handelt.

6. Haftklebstoffe gemäß einen der Ansprüche 1 bis 5, **dadurch gekennzeichnet, daß** es sich bei dem aromatischen Emulgator um eine ionische Verbindung mit einem Molekulargewicht unter 1000 g/mol, welche mindestens eine Sulfatgruppe oder Sulfonatgruppe enthält.

7. Haftklebstoffe gemäß Anspruch 6, **dadurch gekennzeichnet, daß** es sich bei dem aromatischen Emulgator um eine Verbindung der Formel 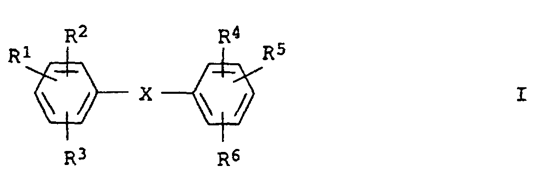 handelt, wobei X für O, S, CH₂, NH oder NR⁷, ein oder zwei der Reste R¹ bis R⁶ für eine Gruppe SO₃⁻ K⁺ und die übrigen Reste R¹ bis R⁶ für H oder eine C₁-C₁₈-Alkylgruppe, R⁷ für eine C₁-C₈-Alkylgruppe und K für eine Gegenkation stehen.

8. Mit einem Haftklebstoff gemäß einen der Ansprüche 1 bis 7 beschichtete Etiketten, Folien oder Klebebänder.

9. Wäßrige Polymerdispersion, enthaltend ein Polymer, aufgebaut aus
| | |
|---|---|
| 50 bis 99,9 Gew.-% | Monomere a) |
| 0,05 bis 20 Gew.-% | Monomere b) |
| 0,05 bis 10 Gew.-% | Monomere c) |
| 0 bis 10 Gew.-% | Monomere d) und |
| 0 bis 30 Gew.-% | Monomere e) |
und ein Emulgatorgemisch gemäß Anspruch 1.

## Claims

1. A pressure-sensitive adhesive comprising an aqueous polymer dispersion, wherein the polymer is composed of
| | |
|---|---|
| from 50 to 99.9% by weight | of at least one C₁-C₁₂ alkyl (meth)acrylate (monomers a) |
| from 0.05 to 20% by weight | of at least one vinylaromatic compound (monomers b) |
| from 0.05 to 10% by weight | of at least one ethylenically unsaturated hydroxy compound (monomers c) |
| from 0 to 10% by weight | of an ethylenically unsaturated acid or an acid anhydride (monomers d) and |
| from 0 to 30 % by weight | of other ethylenically unsaturated compounds (monomers e) |
the weight percentages being based on the polymer, and the polymer dispersion comprising an emulsifier mixture comprising
| | |
|---|---|
| from 20 to 95% by weight of | an aromatic emulsifier and |
| from 5 to 80% by weight of | a sulfate of the formula |
R⁸-O-(Z-O)ₙ - SO₃⁻ K⁺ II
where:
R⁸ is C₁-C₁₈ alkyl
Z 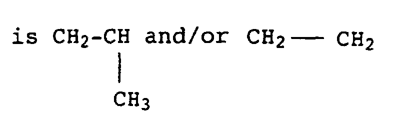
n is an integer from 1 to 40 and
K is a cation,
and the aromatic emulsifier being an emulsifier which consists to the extent of at least 5% by weight of aromatic carbon atoms, the weight percentages of the emulsifiers being based on the total amount of emulsifier.

2. An adhesive as claimed in claim 1, wherein the polymer is composed of
| | |
|---|---|
| from 60 to 99.9% by weight | of monomers a) |
| from 0.05 to 5% by weight | of monomers b) |
| from 0.05 to 5% by weight | of monomers c) |
| from 0 to 5% by weight | of monomers d) and |
| from 0 to 25% by weight | of monomers e). |

3. An adhesive as claimed in either of claims 1 and 2, wherein monomers c) comprise C₁-C₈ hydroxyalkyl (meth)acrylates.

4. An adhesive as claimed in any of claims 1 to 3, wherein monomers b) comprise styrene.

5. An adhesive as claimed in any of claims 1 to 4, wherein monomers a) comprise C₁ to C₈ alkyl (meth)acrylates.

6. An adhesive as claimed in any of claims 1 to 5, wherein the aromatic emulsifier comprises an ionic compound having a molecular weight of less than 1000 g/mol and comprising at least one sulfate group or sulfonate group.

7. An adhesive as claimed in claim 6, wherein the aromatic emulsifier comprises a compound of the formula 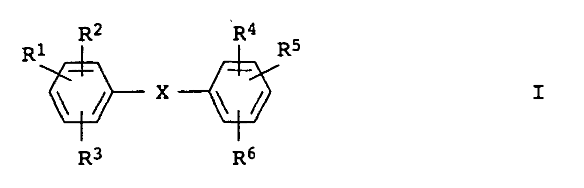 where X is O, S, CH₂, NH or NR⁷, one or two of R¹ to R⁶ are SO₃⁻ K⁺ and the others of R¹ to R⁶ are H or C₁-C₁₈ alkyl, R⁷ is C₁-C₈ alkyl and K is a countercation.

8. A label, sheet or adhesive tape coated with an adhesive as claimed in any of claims 1 to 7.

9. An aqueous polymer dispersion comprising a polymer composed of
| | |
|---|---|
| from 50 to 99.9% by weight of | monomers a) |
| from 0.05 to 20% by weight of | monomers b) |
| from 0.05 to 10% by weight of | monomers c) |
| from 0 to 10% by weight of | monomers d) and |
| from 0 to 30% by weight of | monomers e) |
and an emulsifier mixture as claimed in claim 1.

## Revendications

1. Adhésifs contenant une dispersion polymère aqueuse, **caractérisés en ce que** le polymère est constitué de
| | |
|---|---|
| 50 à 99,9% en poids | d'au moins un (méth)acrylate d'alkyle en C₁ à C₁₂ (monomères a) |
| 0,05 à 20% en poids | d'au moins un composé vinylaromatique (monomères b) |
| 0,05 à 10% en poids | d'au moins un composés hydroxylé éthyléniquement insaturé (monomères c) |
| 0 à 10% en poids | d'au moins un acide ou d'un anhydride d'acide éthyléniquement insaturé (monomères d) et |
| 0 à 30% en poids | d'autres composés éthyléniquement insaturés (monomères e) |
les indications de pourcentages en poids étant par rapport au polymère, et **en ce que** la dispersion polymère contient un mélange d'émulsifiants constitué de
| | |
|---|---|
| 20 à 95% en poids | d'un émulsifiant aromatique et/ou |
| 5 à 80% en poids | d'un sulfate de formule |
R⁸ -O- (Z - O)ₙ - SO⁻₃ k⁺ II,
où les variables ont la signification suivante:
R⁸: alkyle en C₁ à C₁₈,
Z: CH₂ - CH - CH₃ ou CH₂ - CH₂
n: un nombre entier de 1 à 40
k: un cation,
et où l'émulsifiant aromatique est un émulsifiant constitué à au moins 5% en poids d'atomes de C aromatiques, où les indications de pourcentages en poids d'émulsifiants sont ramenées à la quantité totale d'émulsifiants.

2. Adhésifs selon la revendication 1, **caractérisés en ce que** le polymère est constitué de
| | |
|---|---|
| 60 à 99,9% en poids | de monomères a) |
| 0,05 à 5% en poids | de monomères b) |
| 0,05 à 5% en poids | de monomères c) |
| 0 à 5% en poids | de monomères d) et |
| 0 à 25% en poids | de monomères e). |

3. Adhésifs selon la revendication 1 ou 2, **caractérisés en ce que** le monomère c) est un (méth)acrylate d'hydroalkyle en C₁ à C₈.

4. Adhésifs selon l'une quelconque des revendications 1 à 3, **caractérisés en ce que** le monomère b) est du styrène.

5. Adhésifs selon l'une quelconque des revendications 1 à 4, **caractérisés en ce que** les monomères a) sont des (méth)acrylates d'alkyle en C₁ à C₈.

6. Adhésifs selon l'une quelconque des revendications 1 à 5, **caractérisés en ce que** l'émulsifiant aromatique est un composé ionique d'un poids moléculaire de moins de 1000 g/mole, qui contient au moins un groupe sulfate ou un groupe sulfonate.

7. Adhésifs selon la revendication 6, **caractérisés en ce que** l'émulsifiant est un composé de formule 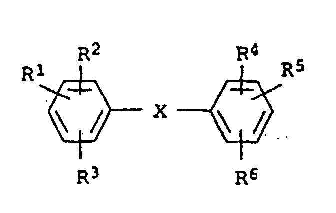 dans laquelle X représente O, S, CH₂, NH ou NR⁷, un ou deux des restes R¹ à R⁶ représentant un groupe SO₃⁻ K⁺ et les autres restes R¹ à R⁶ représentant un radical alkyle en C₁ à C₁₈, R⁷ représente un radical alkyle en C₁ à C₈ et K un contre-ion.

8. Etiquettes, feuilles ou bandes adhésives revêtues d'un adhésif selon l'une quelconque des revendications 1 à 7.

9. Dispersion polymère aqueuse, contenant un polymère constitué de
| | |
|---|---|
| 50 à 99,9% en poids | de monomères a) |
| 0,05 à 20% en poids | de monomères b) |
| 0,05 à 10% en poids | de monomères c) |
| 0 à 10% en poids | de monomères d) et |
| 0 à 30% en poids | de monomères e) |
et d'un mélange d'émulsifiants selon la revendication 1.
